# EUROPEAN PATENT APPLICATION

(11) **EP 4 656 591 A1**
(43) Date of publication of application: **03.12.2025**
(21) Application number: 24179145.8
(22) Date of filing: 30.05.2024
(51) Int. Cl.: C01B 3/00, G05B 19/18, G06N 3/044, C01B 6/00, F17C 11/00

(54) **CONTROLLING A METAL HYDRIDE HYDROGEN STORAGE**

(71) Applicant: GKN Hydrogen GmbH, 53177 Bonn (DE)
(72) Inventor: Schupp, Thomas, 42477 Radevormwald (DE); Schwingshackl, Daniel, 39030 Gsies (IT); Zirm, Sebastian, 39040 Vahrn (IT)
(74) Representative: WBH Wachenhausen Patentanwälte PartG mbB

(57) **Abstract**

A method for controlling a metal hydride hydrogen storage (100) is described. The method comprising providing (S1) a model (1) of the metal hydride hydrogen storage (100), assessing (S2) a future hydrogen flow profile (2) of the metal hydride hydrogen storage (100), determining (S3) a state variable (7) of the tempering fluid of the tempering circuit (54) based on the provided model (1) and the assessed future hydrogen flow profile (2), and controlling (S4) the tempering circuit (54) based on the determined state variable (7) of the tempering fluid. Furthermore, a controller (50) which is configured for executing steps of this method is described. Furthermore, a metal hydride hydrogen storage (100) comprising a metal hydride hydrogen storage component (14) for storing and releasing hydrogen, a tempering circuit (54) for tempering the metal hydride hydrogen storage component (14) with a tempering fluid and this controller (50) is described.

## Description

### Technical field

A method for controlling a metal hydride hydrogen storage is described. Furthermore, a controller which is configured for executing the steps of this method is described. Furthermore, a metal hydride hydrogen storage comprising a metal hydride hydrogen storage component for storing and releasing hydrogen, a tempering circuit for tempering the metal hydride hydrogen storage component with a tempering fluid and this controller is described.

### Background of the invention

For controlling a hydrogen storage, controllers such a PID-controllers are used for controlling a tempering circuit with a tempering fluid of the hydrogen storage.

### Summary of the invention

A first aspect relates to a method for controlling a metal hydride hydrogen storage. Some or all steps of the method may be executed by a controller, for example by a controller of the metal hydride hydrogen storage. The method may be a computer-implemented method. The method for controlling may be a feedback control method.

The metal hydride hydrogen storage comprises a metal hydride hydrogen storage component for storing and releasing hydrogen. The metal hydride hydrogen storage component, or short hydrogen storage component or component, may be configured to absorb hydrogen during storage, and to desorb hydrogen during release. During storage, heat may be released by the hydrogen storage component, as absorption of the hydrogen by the hydrogen storage component may be an exothermic reaction. During release of the hydrogen, heat may be added to the hydrogen storage component as desorption of hydrogen by the hydrogen storage component may be an endothermic reaction. The metal hydride hydrogen storage may comprise one or more of the hydrogen storage components. The hydrogen storage component may be a pellet, preferably fabricated by moulding at least one hydrogen absorbing powder material and optionally additionally a binder.

The metal hydride hydrogen storage further comprises a tempering circuit for tempering the metal hydride hydrogen storage component with a tempering fluid. The tempering circuit may comprise at least one of a pump, a tempering device, such as a heater or a cooler, and piping. The tempering circuit may be configured for heating and/or cooling the metal hydride hydrogen storage component. The tempering fluid may be a glycol water mixture. Via piping, the tempering fluid may be conducted to and from the metal hydride hydrogen storage component for tempering the latter.

The method comprises a step of providing a model of the metal hydride hydrogen storage. Providing may comprise or be reading the model from a storage device, such as a memory, which may be a local memory or a cloud. On the memory, the model may be stored. With the model, a future behaviour of the metal hydride hydrogen storage can be determined. For example, based on present properties, for instance defined by one or more state variables of the metal hydride hydrogen storage, future properties, for instance defined by one or more state variables of the metal hydride hydrogen storage, can be determined with the model.

The method further comprises a step of assessing a future hydrogen flow profile of the metal hydride hydrogen storage. Assessing may comprise providing the future hydrogen flow profile, for instance via reading the future hydrogen flow profile, for example from a memory. The future hydrogen flow profile may comprise information about hydrogen flow in the future. The hydrogen flow profile may be defined as a function of time, for instance as a discrete function of time. For instance, the hydrogen flow as a discrete function of time may be defined by a function and information about this function may be comprised by the future hydrogen flow profile. For instance, the future hydrogen flow profile may have a first time range in the future, in which hydrogen flows into the metal hydride hydrogen storage and is being absorbed by the hydrogen storage component. In a second future time range, which differs from the first time range, hydrogen may flow out of the metal hydride hydrogen storage as hydrogen is desorbed by the hydrogen storage component.

The method further comprises a step of determining a state variable of the tempering fluid of the tempering circuit based on the provided model and the assessed future hydrogen flow profile. A state variable may be for example a flow rate or a temperature of the tempering fluid. The flow rate, or short flow, may be a volumetric flow rate or mass flow rate. For instance, in the step of determining, at least one state variable of the tempering fluid is determined. In one embodiment, the flow rate of the tempering fluid through the tempering circuit, for instance through a piping of the tempering circuit, is determined. According to another embodiment, the temperature of the tempering fluid, for instance at the tempering device, is determined. In another embodiment, the flow rate as well as the temperature of the tempering fluid is determined.

During the step of determining, the state variable may be determined for one or more points in time, for instance in the present and/or in the future. Determining the state variable of the tempering fluid for points in time in the future may be performed by using the model for predicting state variables of the metal hydride hydrogen storage in the future. Determining the state variable of the tempering fluid may be performed by predicting state variables of the metal hydride hydrogen storage in the future such that a predicted future hydrogen flow, being for instance a state variable of the metal hydride hydrogen storage, fits the assessed future hydrogen flow profile as good as possible.

The method further comprises a step of controlling the tempering circuit based on the determined state variable of the tempering fluid. For instance, controlling the tempering circuit may comprise controlling the flow and/or temperature of the tempering fluid based on the determined state variable, for instance based on the determined flow and/or temperature of the tempering fluid. The determined state variable may be a setpoint for controlling the tempering circuit. For instance, a certain flow and/or temperature of the tempering fluid is determined as setpoint, and the controlling of the tempering circuit may be based on this determined flow and/or temperature as setpoint. Controlling the tempering circuit may be done to achieve a certain hydrogen flow into or out of the metal hydride hydrogen storage. Controlling the tempering circuit may be done such that the achieved hydrogen flow fits the assessed future hydrogen flow profile as good as possible.

With such a method, the metal hydride hydrogen storage may be pre-conditioned for future storing and/or releasing of hydrogen via the tempering circuit. With the pre-conditioned metal hydride hydrogen storage, the metal hydride hydrogen storage may be configured for providing a hydrogen flow rate according to the assessed future hydrogen flow profile. With this, undesirable behaviour of the metal hydride hydrogen storage, such as unintended hydrogen flow, temperature and/or pressure of the metal hydride hydrogen storage outside of predefined working ranges for the metal hydride hydrogen storage, may be prevented. Pre-conditioning may be achieved by tempering, for instance heating and/or cooling the metal hydride hydrogen storage component by the tempering circuit and with the tempering fluid.

In an embodiment, the step of assessing the future hydrogen flow profile comprises identifying of at least one of a future hydrogen supply, a future hydrogen demand, and a weather forecast. Identifying may comprise a determining of at least one of the future hydrogen supply, the future hydrogen demand, and the weather forecast. For instance, the future hydrogen flow profile may be assessed based on the future hydrogen supply supplied by an electrolyzer. The electrolyzer may for instance be supplied with electric energy from a photovoltaic, PV, module converting solar energy into electric energy. The future hydrogen demand may comprise information about future demand of a fuel cell, which may be connected to or be part of the metal hydride hydrogen storage and which may consume hydrogen for producing electric energy. For example, the future hydrogen demand may correlate with a delivery schedule of a utility operator. A weather forecast may for instance comprise information about solar radiation for the next days at a specific location, for instance where the PV module is located. Based on all this information, the future hydrogen flow profile including hydrogen flowing into and out of the metal hydride hydrogen storage may be assessed. Thus, a hydrogen flow as a function of time and being a discrete function for a certain time range in the future may be determined and may constitute the future hydrogen flow profile. The future hydrogen flow profile may thus be assessed with high accuracy. Thus, controlling the tempering circuit may be based on a highly accurately assessed future hydrogen flow profile and thus the pre-conditioning of the metal hydride hydrogen storage may be highly accurate.

In an embodiment, the identifying of the at least one of the future hydrogen supply, the future hydrogen demand, and the weather forecast is conducted based on a pattern recognition. For instance, the future hydrogen supply is identified by a pattern recognition, for instance based on the weather forecast. Thus, for instance, based on future solar radiation for the next 24 or 48 hours, the future hydrogen supply supplied by an electrolyzer powered by the PV module may be identified by pattern recognition. This pattern recognition may be based on previously identified future hydrogen supplies, which may have been either confirmed or contradicted by actual hydrogen supply, which has already occurred in the past and for which future hydrogen supply had been identified previously. Identifying the future hydrogen demand based on a pattern recognition may for instance be based on machines or plants consuming electric energy or industrial furnaces or H2-ready gas burner directly consuming hydrogen and a consumption profile of these plants, machines, furnaces, or burners. For instance, based on previous electric energy consumption by these machines or plants, future hydrogen demand as equivalents of the required electric energy for the plants and machines may be identified based on pattern recognition. The weather forecast may be identified based on a pattern recognition and based on previous weather. The pattern recognition may be performed based on statistical methods, machine learning algorithms and/or probabilistic models. With such a method, identifying of the at least one of the future hydrogen supply, the future hydrogen demand and the weather forecast may be done automatically. Thus, the assessing of the future hydrogen flow profile comprising the identifying of the at least one of the future hydrogen supply, the future hydrogen demand and the weather forecast may be done automatically and without user interaction necessary.

In an embodiment, the identifying of the at least one of the future hydrogen supply, the future hydrogen demand, and the weather forecast is conducted based on a user input. For instance, the future hydrogen supply may be identified based on a user input. In an embodiment, the user may input that a further PV module may be installed and thus added to previously existing PV modules, therefore maximizing the maximum of electrical power provided by the PV modules to the electrolyzer. Thus, the maximum future hydrogen supply may increase. Furthermore, identifying the future hydrogen demand may be based on a user input, as the user may be a production controller controlling a production, machinery or plant using electricity produced by a fuel cell with hydrogen of the metal hydride hydrogen storage. Thus, the user may, at least partially, define future hydrogen demand. Furthermore, the weather forecast may be identified based on user input, as a user, such as a meteorologist, may identify weather forecast, for instance based on previous weather phenomena. With such a method, future hydrogen demand may for instance be easily and/or exactly identified by user input Identifying of at least one of the future hydrogen supply, the future hydrogen demand and the weather forecast may be based on a pattern recognition and/or a user input. Thus, advantages of both types of identifying at least one of the future hydrogen supply, the future hydrogen demand and the weather forecast can be combined.

In an embodiment, the step of determining the state variable of the tempering fluid comprises solving an optimization problem. For instance, solving the optimization problem may comprise determining a multitude of possible present and/or future state variables for the tempering fluid. Several different future hydrogen flows may be determined, wherein each of the different hydrogen flows as a function of time depends on a certain set of state variables of the tempering fluid. For instance, a certain flow rate and/or temperature of the tempering fluid corresponds to a certain hydrogen flow in the future based on the provided model of the metal hydride hydrogen storage. During solving the optimization problem, the optimal future hydrogen flow and the corresponding and thus optimal state variables may be determined. This may be done to fit the assessed future hydrogen flow profile as good as possible. The optimal state variables may thus be used for controlling the tempering fluid. Hence, the optimal state variable, for instance the optimal flow rate and/or temperature of the tempering fluid, may be used for controlling the tempering circuit for optimally pre-conditioning the metal hydride hydrogen storage.

In an embodiment, the solving of the optimization problem is based on at least one of an energy optimization and a hydrogen flow optimization. In case the solving of the optimization problem is based on the energy optimization, the energy needed for tempering the tempering fluid of the tempering circuit for the pre-conditioning may be minimized. Thus, the necessary energy, for instance for heating and/or cooling the metal hydride hydrogen storage may be minimized in order to achieve the future hydrogen flow profile. Alternatively, or additionally, the solving of the optimization problem is based on the hydrogen flow optimization. The hydrogen flow may be hydrogen demand and/or hydrogen supply. For instance, it may be defined that the future hydrogen flow profile shall be reached within a small margin of error of for instance below 10%, e.g. between 2 and 5%. Accordingly, the solving of the optimization problem may thus be based on hydrogen flow optimization, such that controlling the tempering circuit may be in such a way that the future hydrogen flow profile is reached within this margin of error. With such a method, the controlling of the tempering circuit may be either optimized regarding energy consumption for tempering or hydrogen flow. Thus, either the pre-conditioning is done very efficiently and/or the release or intake of hydrogen is done very accurately.

In an embodiment, the step of providing the model comprises defining an updated version of a neural-network based model of the metal hydride hydrogen storage based on at least one measured state variable of the metal hydride hydrogen storage. The at least one measured state variable may be one of a pressure of the hydrogen, a flow rate of the hydrogen, a temperature of the hydrogen, a temperature of the metal hydride hydrogen storage component, and/or a temperature, pressure and/or flow rate of the tempering fluid of the tempering circuit. The neural-network based model may be a model which may be determined by a neural-network based on input parameters. Input parameters may comprise for instance at least one of the measured state variable of the metal hydride hydrogen storage. Input parameters may comprise the future hydrogen flow profile. Defining an updated version of the neural-network based model may be done by inputting for instance at least one measured state variable, such as the temperature of the metal hydride hydrogen storage and the future hydrogen flow profile into the neural-network. After processing these inputs through the neural-network, an updated version of the neural-network based model may be outputted by the neural-network. Thus, the updated version of the neural-network based model may be defined. As this may be done based on at least one measured state variable of the metal hydride hydrogen storage and/or the future hydrogen flow profile, which may have changed since the last time of defining an updated version of a neural-network based model by the neural-network, the neural-network based model may better describe the actual metal hydride hydrogen storage than the previously defined version of the neural-network based model. With such a method, the neural-network based model may be updated according to the latest information of the future hydrogen flow profile and/or at least one measured state variable of the metal hydride hydrogen storage. Thus, controlling the tempering circuit may be done more accurately. For instance, the optimization problem may be solved more optimally with regard to energy optimization and/or hydrogen flow.

In an embodiment, the step of providing the model comprises determining a difference between the neural-network based model and the metal hydride hydrogen storage. This may be done periodically. Furthermore, the step of defining the updated version of the neural-network based model may be conducted when the neural-network based model differs from the metal hydride hydrogen storage by at least a threshold. The threshold may be user-defined. The threshold may be predefined. Thus, the computing power consuming step of defining an updated version of the neural-network based model may only be executed when there is a difference between the neural-network based model and the actual metal hydride hydrogen storage. This may save computing power. The step of determining a difference may be carried out by comparing measured values of one or more state variables with values of said one or more state variables simulated via the neural-network based model. If a difference between the measured and simulated values exceeds the threshold, step of defining an updated model may be executed.

In an embodiment, the step of providing the model comprises deriving a linearised version of the neural-network based model. The deriving may be executed after defining an updated version of the neural-network based model. For instance, deriving the model may be executed in every time step of execution of the method. Thus, a linearized version of the neural-network based model may be derived for every operating point of the metal hydride hydrogen storage.

The neural-network based model may comprise two sub neural-network models, hereinafter named first neural-network model and second neural-network model. The first neural-network model and the second neural network model may be identical at the beginning of executing the method. The first and the second neural-network model may each describe the behavior of the metal hydride hydrogen storage. The step of deriving the linearised version of the neural-network based model may be performed based on the first neural-network model. This may be performed at every timestep. Thus, the model for determining the state variable of the tempering fluid may be derived from the first neural-network model.

The second neural-network model may be adjusted to the actual behavior of the metal hydride hydrogen storage at every timestep. When the difference between the neural-network based model and the metal hydride hydrogen storage is determined to be more than the threshold, for example because the difference between the first and second neural-network models are above the threshold, than the first neural-network model is set to the specifics of the second neural-network model. The two sub neural-network models are thus set to the same properties according to the properties of the second neural-network model at the time. Thus, the first neural-network model may be set to be in accordance with the second neural-network model in the step of defining the updated version of the neural-network based model.

Accordingly, a method may be provided such that an updated model may be used for controlling the tempering circuit. Thus the pre-conditioning may be optimized and be based on the latest model of the metal hydride hydrogen storage. By linearising the neural-network based model, the step of determining the state variable based on the provided model may be executed efficiently as an easier to be handled linearised version of the neural-network based model may be used.

In an embodiment, the step of determining the state variable of the tempering fluid is conducted via a model predictive control. Based on the model of the metal hydride hydrogen storage, future state variables, such as temperature, pressure and/or loading state of the metal hydride hydrogen storage may be determined for providing a future hydrogen flow. In other words, these state variables are determined in such a way that the metal hydride hydrogen storage is conditioned, i.e. able, to provide the future hydrogen flow profile. This may be done, for instance as part of solving an optimization problem and for a multitude of different future hydrogen flows and due to different determined state variables of the tempering fluid. By solving the optimization problem, the optimized state variable of the tempering fluid is determined. During determining of the state variable, the state variable may be determined for the next timestep only by the model predictive control. Then, controlling the tempering circuit with this determined state variable of the tempering fluid may be conducted.

In an embodiment, the step of determining of the state variable of the tempering fluid is based on at least one measured state variable of the metal hydride hydrogen storage. For example, after determining the state variable of the tempering fluid by solving the optimization problem for the next timestep and controlling the tempering circuit based on this determined state variable, the actual hydrogen flow out of the metal hydride hydrogen storage may be measured as a measured state variable of the metal hydride hydrogen storage. This may be used as an input for the model predictive control for determining the state variable of the tempering fluid for the next timestep. Alternatively, or additionally, other measured state variables of the metal hydride hydrogen storage, for instance temperature or pressure of the hydrogen or the tempering fluid, may be used as input into the model predictive control for determining the state variable of the tempering fluid. Thus, controlling the tempering circuit by controlling the flow rate and/or temperature of the tempering fluid may be done based on a model predictive control, and thus without overshooting of the future hydrogen flow with regard to the assessed future hydrogen flow profile. At the same time, the future hydrogen flow may reach the assessed future hydrogen flow profile as fast as possible, for instance more efficiently and/or more accurately than with conventional controllers, such as PID controllers.

A second aspect refers to a controller configured for executing the steps of a method according to an embodiment of the first aspect. The controller may be a computer. The controller may comprise the model predictive control. The controller is configured, e.g. programmed, to perform the method according to one of the previously described embodiments.

A third aspect relates to a metal hydride hydrogen storage comprising a metal hydride hydrogen storage component for storing and releasing hydrogen and a tempering circuit for tempering the metal hydride hydrogen storage component with a tempering fluid. Further, the metal hydride hydrogen storage may comprise the controller according to an embodiment of the second aspect. The controller is configured for controlling a state variable of the tempering fluid of the tempering circuit. In an embodiment, the metal hydride hydrogen storage further comprises a vessel portion for accommodating the hydrogen storage component. The metal hydride hydrogen storage may comprise one or more hydrogen storage components. The vessel portion may have an inner vessel surface and an outer vessel surface. The metal hydride hydrogen storage may further comprise a piping portion having an inner piping surface. The metal hydride hydrogen storage may further comprise a tempering channel for guiding the tempering fluid between the outer vessel surface of the vessel portion and the inner piping surface of the piping portion. In an embodiment, the metal hydride hydrogen storage further comprises at least one of a fuel cell and an electrolyzer. At least one of the fuel cell and the electrolyzer is fluidly connected to the vessel portion accommodating the hydrogen storage component. Hydrogen can flow from the hydrogen storage component to a fuel cell or from the electrolyzer to the hydrogen storage component.

A fourth aspect relates to a hydrogen storage assembly comprising one or more hydrogen storage components. A fifth aspect relates to a system comprising the hydrogen storage assembly according to the fourth aspect and the controller according to the second aspect.

### Brief description of the drawings

Fig. 1 shows a metal hydride hydrogen storage comprising a tempering circuit according to an embodiment.
Fig. 2 shows a hydrogen storage assembly of the metal hydride hydrogen storage of Fig. 1.
Fig. 3 shows a data flow diagram during controlling the metal hydride hydrogen storage of Fig. 1 and tempering a tempering fluid in a piping portion of the hydrogen storage assembly of Fig. 2.
Fig. 4 shows steps of a method for controlling the metal hydride hydrogen storage of Fig. 1 and tempering the tempering fluid in the piping portion of the hydrogen storage assembly of Fig. 2.

### Detailed description of embodiments

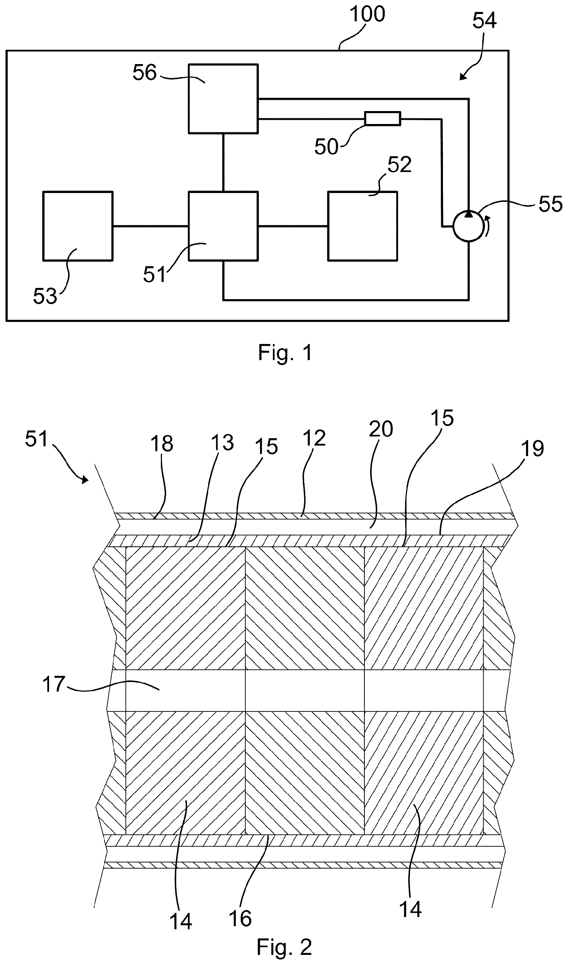

Fig. 1 shows a metal hydride hydrogen storage 100 comprising a tempering circuit 54 according to an embodiment. The tempering circuit 54 may comprise a pump 55 for circulating a tempering fluid through a hydrogen storage assembly 51 and a tempering device 56 for cooling and heating said tempering fluid. Furthermore, the metal hydride hydrogen storage 100 comprises a controller 50 which is configured for controlling at least one of the pump 55 and the tempering device 56. Therefore, the controller 50 may be configured to control a flow rate and/or pressure of the tempering fluid caused by the pump 55 and/or a temperature of the tempering fluid caused by the tempering device 56, either by cooling or by heating the tempering fluid with the tempering device 56. In the present embodiment, the tempering fluid is water, which may be mixed with glycol as frosting agent.

The metal hydride hydrogen storage 100 comprises the hydrogen storage assembly 51 for storing hydrogen, an electrolyzer 52 for generating hydrogen from water via electrolysis, and a fuel cell 53 for generating electrical power on the basis of a chemical reaction of hydrogen and oxygen. The metal hydride hydrogen storage 100 is configured to generate hydrogen with the electrolyser 52, to store the generated hydrogen in the hydrogen storage assembly 51, and to generate electricity based on the stored hydrogen with the fuel cell 53. For heating the tempering fluid via the tempering device 56, waste heat of the fuel cell 53 may be utilized. In the present embodiment, the hydrogen storage assembly 51 of the metal hydride hydrogen storage 100 shown in Fig. 1 may comprise one or multiple of the hydrogen storage assemblies 51 shown in Fig. 2, which may be stacked on one another.

Fig. 2 shows partially a hydrogen storage assembly 51. The hydrogen storage assembly 51 comprises a vessel portion 13, which is formed as a conduit with a circular cross-section in the present embodiment. Within the vessel portion 13, a plurality of metal hydride hydrogen storage components 14, or simply hydrogen storage components 14 or components 14, is provided. The components 14 have a cylindrical shape with a lateral surface 15. All of the components 14 have the same diameter and are stacked on one another to form a large cylinder having a height corresponding to a stacking length of the components 14. The lateral surfaces 15 of all of the components 14 are in physical contact with an inner vessel surface 16 of the vessel portion 13. Furthermore, as derivable from Fig. 2, each of the components 14 comprises a central hole 17 extending through the entire component 14 in the height direction thereof. When stacking the components 14 onto each other, a central channel is formed by the holes 17 of the different components, said central channel being aligned with a hydrogen opening at a frontal surface of the hydrogen storage assembly 51. Therefore, when introducing hydrogen through the hydrogen opening into the hydrogen storage assembly 51, the hydrogen is distributed to all of the components 14 via the central channel formed by the central holes 17. Likewise, when removing hydrogen from the hydrogen storage assembly 51, at least the majority of the hydrogen may be extracted via the central holes 17 and the hydrogen opening from the hydrogen storage assembly 51.

In the present embodiment, the hydrogen storage components 14 shown in Fig. 2 comprise a metal hydride, in the present embodiment a low temperature metal hydride. Furthermore, they comprise a binder, which is formed as a polymer in the present embodiment. Each of the components 14 is formed as a compact by pressing metal hydride and binder particles together. The components 14 comprise a first loading state, in which all of the hydrogen stored in the hydrogen storage assembly 51 has been released to the fuel cell 53 for producing electricity. In this first loading state, a low amount of hydrogen is absorbed in the components 14. At the same time, the components 14 comprise a second loading state, in which the maximum amount of hydrogen has been introduced into the hydrogen storage assembly 51 via the electrolyzer 52. The mass of the components 14 with the maximum amount of absorbed hydrogen in the second loading state may be more than 40 %, optionally more than 50 %, higher than the mass in the first loading state of the components 14. Furthermore, the components may have a different volume in the first and second loading states.

In the present embodiment, the hydrogen storage assembly 51 is designed in such a way that in both the first and the second loading states, the lateral surfaces 15 of the hydrogen storage components 14 are in physical contact with the inner surface 16 of the vessel portion 13. Therefore, in both the first and the second loading states, heat can be transferred between the components 14 and the vessel portion 13 via heat conduction. The physical contact between the lateral surfaces 15 and the inner surface 16 of the vessel portion 13 in both the first and the second loading states can be ensured by providing components 14 which essentially exhibit a dimensional change in between both loading states mainly in height but not in radial direction. Such a behaviour can be provided by designing at least one of the frontal surfaces of the components with a three-dimensional and varying profile resulting in a varying thickness of the components along the radial direction.

Furthermore, the hydrogen storage assembly 51 comprises a piping portion 12 that is formed as a conduit with a circular cross-section. While the vessel portion 13 extends along the entire stacking length of the hydrogen storage components 14, the piping portion 12 extends at least along 80%, preferably along more than 90 %, of the stack length of the components 14. The piping portion 12, the vessel portion 13 and the hydrogen storage components 14 are arranged concentrically with respect to each other. The piping portion 12 is provided on the outside of the vessel portion 13 and comprises an inner piping surface 18. The inner piping surface 18 of the piping portion 12 and an outer vessel surface 19 of the vessel portion 13 form a tempering channel 20. In the present embodiment, the tempering channel 20 is formed as an annular channel extending along the longitudinal direction of the hydrogen storage assembly 51. At one end of the tempering channel 20, an inlet, and at the other end of the tempering channel, an outlet is provided for the tempering fluid. Via the inlet and the outlet, the tempering fluid may be conducted through the tempering circuit 54, as will be described in the following.

For storing hydrogen generated with the electrolyzer 52 in the hydrogen storage assembly 51, the hydrogen is inserted into the central holes 17 of the components 14. It is absorbed by the metal hydrides of the components 14, which results in an increase of temperature since the absorption of hydrogen by the metal hydrides of the components 14 is an exothermal reaction. Likewise, the pressure may increase if more hydrogen is supplied than may be absorbed by the hydrogen storage component(s). To mitigate a pressure and/or temperature increase, the tempering circuit 54 circulates the tempering fluid with the pump 55 through the inlet into the tempering channels 20. Due to the physical contact between the components 14 and the inner surface 15 of the vessel portion 13, a good heat transfer between the tempering fluid and the components 14 is ensured. The components 14 can therefore be cooled effectively to allow for a larger loading with hydrogen. The tempering fluid exits the outlets to enter the tempering device 56, which cools it down for re-introduction into the inlets of the tempering channels 20. When the hydrogen storage assembly 51 has absorbed the maximum amount of hydrogen, the hydrogen storage components 14 can be at their second loading state. In this situation, a pressure of approximately 30 to 40 bar can be present within the vessel portion 13 at a temperature of approximately 20 °C.

When hydrogen stored in the hydrogen storage assembly 51 is supposed to be released, the hydrogen opening is opened. Due to the pressure difference between the fuel cell 53 and the vessel portion 13, hydrogen is desorbed from the components 14 and released from the storage device via the central holes 17 and the hydrogen opening. As the desorption of hydrogen is an endothermal reaction and the pressure difference between the vessel portion 13 and the fuel cell 53 continuously decreases, a heating of the components 14 is required for ensuring a constant hydrogen outflow at the hydrogen opening. For this purpose, the tempering device 56 heats the tempering fluid, for instance with waste heat from the fuel cell 53, to a temperature of over 50°C, preferably over 80 °C, optionally over 90 °C. The pump 55 circulates said tempering fluid through the inlet into the tempering channels 20 for heating the hydrogen storage components 14. Since the lateral surfaces 15 of the components 14 are in physical contact with the inner surface 16 of the vessel portion 13 throughout the entire above-described process, the components 14 can be effectively cooled and heated, which results in an efficient and effective storage and release of hydrogen. Thus, the tempering circuit 54 is configured for tempering the metal hydride hydrogen storage component 14 with the tempering fluid.

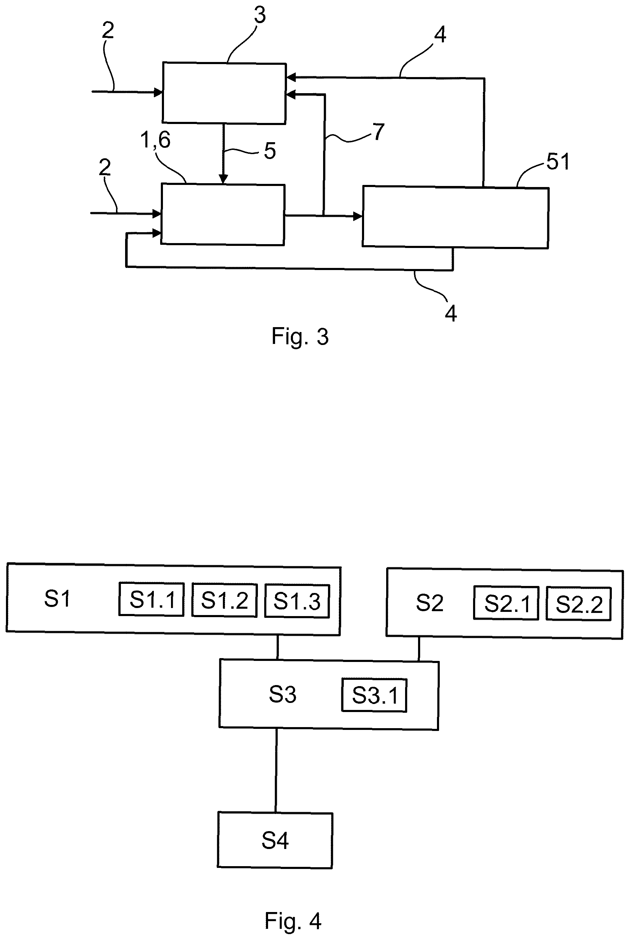

For an optimized usage of the metal hydride hydrogen storage 100, the metal hydride hydrogen storage 100 is to release or receive a predefined amount of hydrogen or a predefined hydrogen flow rate at a predefined time. This requires a pre-conditioning of the metal hydride hydrogen storage 100 via the tempering circuit 54 described above. For this pre-conditioning to be achieved, the controller 50 is configured for executing steps of a method for controlling the metal hydride hydrogen storage 100, i.e. the tempering circuit 54. Fig. 3 shows a dataflow diagram and Fig. 4 shows steps of the control of the metal hydride hydrogen storage 100 of Fig. 1 for tempering the tempering fluid in the piping portion 12 of the hydrogen storage assembly 51 of Fig. 2.

The method comprises a step of providing S1 a model 1 of the metal hydride hydrogen storage 100. The model 1 describes approximately the metal hydride hydrogen storage 100 and allows to predict future state variables of the metal hydride hydrogen storage 100, for instance based on current state variables of the metal hydride hydrogen storage 100 and/or state variables of inflow and/or outflow parameters. The step of providing S1 the model 1 comprises defining S1.1 an updated version of a neural-network based model 3. The neural-network based model 3 is also a model of the metal hydride hydrogen storage but is different from the model described above. The neural-network based model 3 describes the actual metal hydride hydrogen storage 100. The neural-network based model 3 is more accurate than the model 1 of the metal hydride hydrogen storage 100. The step of defining S1.1 the updated version of the neural-network based model 3 is based on at least one measured state variable 4 of the metal hydride hydrogen storage 100. For this, at least one state variable 4 of the metal hydride hydrogen storage 100 is measured, for instance with a sensor which is not shown. The at least one measured state variable 4 may be one of a temperature or a flow of the tempering fluid or a temperature or a flow or pressure of the hydrogen flowing in or out of the metal hydride hydrogen storage 100. Based on a trained neural-network, which is not shown explicitly, and based on the at least one measured state variable 4 as input data into the neural-network, an updated version of the neural-network based model 3 as output data of the neural-network may be defined. Furthermore, the updated version may be defined based on a future hydrogen flow profile 2, which will be described further below.

Furthermore, the step of providing S1 the model 1 comprises determining S1.2 a difference between the neural-network based model 3 and the metal hydride hydrogen storage 100 being the actual and physical hydrogen storage. The step of defining S1.1 the updated version of the neural-network based model 3 is conducted when the neural-network based model 3 differs from the metal hydride hydrogen storage 100 more than a threshold. That means that when the neural-network based model 3 differs significantly, i.e., more than at least the threshold, from the actual metal hydride hydrogen storage 100, then the step of defining S1.1 the updated version of the neural-network based model 3 is executed. The step of determining S1.2 a difference may be carried out by comparing measured values of one or more state variables of the hydrogen storage assembly 100 with values of one or more state variables simulated via the neural-network based model 3. If a difference between the measured and simulated values of the one or more state variables exceeds a predefined threshold, step S1.1 may then be executed. The step of defining S1.1 an updated version of the neural-network based model 3 may be based on the latest measured state variables 4. Furthermore, the step of providing S1 the model 1 comprises deriving S1.3 a linearised version 5 of the neural-network based model 3 at every timestep. The step of deriving S1.3 comprises linearising of the non-linear neural-network based model 3, such that the linear model 1 is provided.

The neural-network based model 3 may comprise two sub neural-network models, which are not shown explicitly. A first neural-network model may be used for deriving S1.3 the linearised version 5. A second neural-network model may be used to be in accordance with the actual metal hydride hydrogen storage 100 based on the latest measured state variables 4. The second neural-network model may describe the metal hydride hydrogen storage 100 as accurate as possible in every timestep. In the step S1.2, a difference may be determined between the first and second neural-network models. If the difference is above the threshold, then the first-neural network model gets updated to correspond to the second neural-network model in the step S1.1.

Furthermore, the method comprises a step of assessing S2 a future hydrogen flow profile 2 of the metal hydride hydrogen storage 100. The future hydrogen flow profile 2 may be a setpoint or a number of setpoints for the future hydrogen flow in or out of the metal hydride hydrogen storage 100. The step of assessing S2 of the future hydrogen flow profile 2 comprises identifying S2.1, S2.2 of at least one of a future hydrogen supply, a future hydrogen demand, and a weather forecast based on either a pattern recognition, a user input or both. For instance, in one embodiment, the future hydrogen demand is based on a user input. As such, a user, e.g. a head of production of a plant, issues a specific future hydrogen demand, for instance that a certain hydrogen flow profile for the next 48 hours is demanded. The future hydrogen demand may also be based on a pattern recognition. For instance, the future hydrogen demand may be based on a pattern recognition based on previous hydrogen flow, such as flow rate, for instance mass flow rate or volumetric flow rate, as well as corresponding previous waste heat used for heating the tempering fluid for achieving this previous hydrogen flow.

Additionally, a future hydrogen supply is identified based on weather forecast, for instance received by the Internet, based on a pattern recognition. As such, and based on historic data, the pattern recognition may identify a future hydrogen supply of the electrolyzer 52 which may in this embodiment be empowered by photovoltaic, PV, modules and thus solar radiation. Hence, a weather forecast defines the future hydrogen supply of the electrolyzer 52 powered by the PV modules. The pattern recognition may thus be trained with previous weather forecasts and previous hydrogen supplies and may thus identify, based on the actual and current weather forecast, a future hydrogen supply. The identified future hydrogen supply and future hydrogen demand are hence combined for the step of assessing S2 the complete future hydrogen flow profile 2, thus combining all future intakes and outputs in and out of the metal hydride hydrogen storage 100.

The method further comprises a step of determining S3 a state variable 7 of the tempering fluid of the tempering circuit 54 based on the provided model 1 and the assessed future hydrogen flow profile 2. The step of determining S3 of the state variable 7 of the tempering fluid is conducted via a model predictive control 6. Furthermore, the step of determining S3 of the state variable 7 of the tempering fluid is based on at least one measured state variable 4 of the metal hydride hydrogen storage 100. The step of determining S3 the state variable 7 of the tempering fluid comprises solving S3.1 an optimization problem. During solving S3.1 of the optimization problem, state variables such as temperature, pressure, loading state of the metal hydride hydrogen storage 100 may be determined and predicted based on the model 1 and the at least one measured state variable 4 of the metal hydride hydrogen storage 100. Based on these predicted state variables of the metal hydride hydrogen storage 100, a multitude of different future hydrogen flows as a function of time are calculated. With the model 1, it is possible to calculate and predict the behavior of the metal hydride hydrogen storage 100 based on the measured state variables 4. Each of these different future hydrogen flows corresponds to a certain set of state variables of the tempering fluid used in the model 1. Out of these different sets of state variables of the tempering fluid, an optimal set of state variables of the tempering fluid is determined. Based on the different future hydrogen flows and compared to the assessed future hydrogen flow profile 2, the optimal state variable of the tempering fluid is determined to fit the assessed future hydrogen flow profile 2 as good as possible.

The optimization is performed according to one embodiment based on an energy optimization. That means, that the energy necessary for correctly tempering the fluid for achieving the future hydrogen flow profile 2 is minimized. In another embodiment, the optimization is performed based on hydrogen flow optimization, such that the reliability is improved regarding providing hydrogen according to the assessed future hydrogen flow profile 2. In such a case, a maximum error margin around the future hydrogen flow profile 2 may be defined and the step of determining S3 of the state variable is performed such that the actual future hydrogen flow will be possible within the margin of error of the assessed future hydrogen flow profile 2. In the shown embodiment, both the temperature and the flow rate of the tempering fluid are determined as the state variables of the tempering fluid. In other embodiments, only one of the two is determined in step S3.

The method further comprises a step of controlling S4 the tempering circuit 54 based on the determined state variable 7 of the tempering fluid. Herein, and for the current timestep only, the determined state variable 7, herein the flow and the temperature of the tempering fluid, is used for controlling S4 the tempering circuit 54. The tempering circuit 54 is controlled such that for the next timestep, the flow and temperature of the tempering fluid will be according to the determined state variable 7 of the tempering fluid. By controlling S4 the tempering circuit 54, a certain hydrogen flow is achievable in case a certain demand or supply according to the future hydrogen flow profile 2 is requested by another entity, such as a plant.

In the next timestep, the actual hydrogen flow is measured and sent as a measured state variable 4 of the metal hydride hydrogen storage 100 from the hydrogen storage assembly 51 to the model predictive control 6. Based on this actually achieved hydrogen flow, the step of determining S3 the state variable of the tempering fluid is then performed again for the next timestep. The model 1 of the metal hydride hydrogen storage 100 is thus used with the actual hydrogen flow at a certain time for determining S3 the next state variable 7 for controlling S4 the tempering circuit 54. Thus, the controller 50 is configured for controlling S4 the state variable 7 of the tempering fluid of the tempering circuit 54. For improving the step of defining S1.1 the updated version of the neural-network based model 3, the determined state variable 7 is also used. Based thereon, the neural-network based model 3 may more accurately describe the actual metal hydride hydrogen storage 100, thus leading to a more accurate model 1 being used in the step of determining S3 the state variable 7.

With the model predictive control 6, a multi variable system such as the described metal hydride hydrogen storage 100 may be controlled efficiently. Controlling several state variables with different controllers may lead to a problem of conflicts in control of these different state variables, which are for instance dependent from one another, such as the flow rate and the temperature of the tempering fluid. With the model predictive control 6, no such conflicts in controlling multiple state variables such as the flow rate and temperature of the tempering fluid arise.

### Reference signs

- 1: model
- 2: future hydrogen flow profile
- 3: neural-network based model
- 4: measured state variable
- 5: linearised version
- 6: model predictive control
- 7: state variable of the tempering fluid
- 12: piping portion
- 13: vessel portion
- 14: hydrogen storage component
- 15: lateral surface
- 16: inner vessel surface
- 17: central hole
- 18: inner piping surface
- 19: outer vessel surface
- 20: tempering channel
- 50: controller
- 51: hydrogen storage assembly
- 52: electrolyzer
- 53: fuel cell
- 54: tempering circuit
- 55: pump
- 56: tempering device
- 100: metal hydride hydrogen storage
- S1: providing a model
- S1.1: defining an updated version of a neural-network based model
- S1.2: determining a difference
- S1.3: deriving a linearised version
- S2: assessing a future hydrogen flow profile
- S2.1: identifying based on a pattern recognition
- S2.2: identifying based on a user input
- S3: determining a state variable of a tempering fluid
- S3.1: solving an optimization problem
- S4: controlling the tempering circuit

## Claims

1. A method for controlling a metal hydride hydrogen storage (100), wherein the metal hydride hydrogen storage (100) comprises a metal hydride hydrogen storage component (14) for storing and releasing hydrogen and a tempering circuit (54) for tempering the metal hydride hydrogen storage component (14) with a tempering fluid, the method comprising the steps of providing (S1) a model (1) of the metal hydride hydrogen storage (100), assessing (S2) a future hydrogen flow profile (2) of the metal hydride hydrogen storage (100), determining (S3) a state variable (7) of the tempering fluid of the tempering circuit (54) based on the provided model (1) and the assessed future hydrogen flow profile (2), and controlling (S4) the tempering circuit (54) based on the determined state variable (7) of the tempering fluid.

2. The method according to claim 1, wherein the assessing (S2) of the future hydrogen flow profile (2) comprises identifying (S2.1; S2.2) of at least one of a future hydrogen supply, a future hydrogen demand, and a weather forecast.

3. The method according to claim 2, wherein the identifying (S2.1) of the at least one of the future hydrogen supply, the future hydrogen demand, and the weather forecast is conducted based on a pattern recognition.

4. The method according to any of claims 2 or 3, wherein the identifying (S2.2) of the at least one of the future hydrogen supply, the future hydrogen demand, and the weather forecast is conducted based on a user input.

5. The method according to one of the preceding claims, wherein the determining (S3) of the state variable (7) of the tempering fluid comprises solving (S3.1) an optimization problem.

6. The method according to claim 5, wherein the solving (S3.1) of the optimization problem is based on at least one of an energy optimization and a hydrogen flow optimization.

7. The method according to one of the preceding claims, wherein the providing (S1) of the model (1) comprises defining (S1.1) an updated version of a neural-network based model (3) of the metal hydride hydrogen storage (100) based on at least one measured state variable (4) of the metal hydride hydrogen storage (100).

8. Method according to claim 7, wherein the providing (S1) of the model (1) comprises determining (S1.2) a difference between the neural-network based model (3) and the metal hydride hydrogen storage (100), and wherein the defining (S1.1) of the updated version of the neural-network based model (3) is conducted when the neural-network based model (3) differs from the metal hydride hydrogen storage (100) by more than a threshold.

9. The method according to one of the preceding claims, wherein the providing (S1) of the model (1) comprises deriving (S1.3) a linearised version (5) of the neural-network based model (3).

10. The method according to one of the preceding claims, wherein the determining (S3) of the state variable (7) of the tempering fluid is conducted via a model predictive control (6).

11. The method according to one of the preceding claims, wherein the determining (S3) of the state variable (7) of the tempering fluid is based on at least one measured state variable (4) of the metal hydride hydrogen storage (100).

12. A controller (50) configured for executing the steps of a method according to any of the preceding claims.

13. A metal hydride hydrogen storage (100) comprising a metal hydride hydrogen storage component (14) for storing and releasing hydrogen, a tempering circuit (54) for tempering the metal hydride hydrogen storage component (14) with a tempering fluid, and the controller (50) of claim 12, wherein the controller (50) is configured for controlling (S4) a state variable (7) of the tempering fluid of the tempering circuit (54).

14. The metal hydride hydrogen storage (100) according to claim 13, further comprising a vessel portion (13) for accommodating the hydrogen storage component (14), the vessel portion (13) having an inner vessel surface (16) and an outer vessel surface (19), a piping portion (12) having an inner piping surface (18), and a tempering channel (20) for guiding the tempering fluid between the outer vessel surface (19) of the vessel portion (13) and the inner piping surface (18) of the piping portion (12).

15. The metal hydride hydrogen storage (100) according to any of claims 13 and 14, further comprising at least one of a fuel cell (53) and an electrolyzer (52).
